# EUROPEAN PATENT SPECIFICATION

(11) **EP 4 071 219 B1**
(45) Date of publication and mention of the grant of the patent: **30.09.2026**
(21) Application number: 20896674.7
(22) Date of filing: 13.10.2020
(51) Int. Cl.: C09D 175/04, C09D 7/63, C09D 7/61, C08K 5/3492, C08K 5/5415, C23C 2/26, C23C 2/06, B05D 7/14, C08K 3/22, C08G 18/61, C09D 7/20, C23C 2/28, C23C 2/40, C23C 28/00, C23C 30/00, C23C 28/02, C08G 18/28, C08G 18/83, B05D 1/26, B05D 3/02, B05D 3/04

(54) **SURFACE TREATMENT COMPOSITION FOR TERNARY HOT-DIP GALVANNEALED STEEL SHEET, PROVIDING EXCELLENT CORROSION RESISTANCE AND SURFACE COLOR, TERNARY HOT-DIP GALVANNEALED STEEL SHEET SURFACE-TREATED USING SAME, AND MANUFACTURING METHOD THEREFOR**
OBERFLÄCHENBEHANDLUNGSZUSAMMENSETZUNG FÜR EIN TERNÄRES FEUERVERZINKTES STAHLBLECH MIT AUSGEZEICHNETER KORROSIONSBESTÄNDIGKEIT UND OBERFLÄCHENFARBE, DAMIT OBERFLÄCHENBEHANDELTES TERNÄRES FEUERVERZINKTES STAHLBLECH UND HERSTELLUNGSVERFAHREN DAFÜR
COMPOSITION DE TRAITEMENT DE SURFACE POUR TÔLE D'ACIER GALVANISÉE PAR IMMERSION À CHAUD TERNAIRE, FOURNISSANT UNE EXCELLENTE RÉSISTANCE À LA CORROSION ET UNE EXCELLENTE COULEUR DE SURFACE, TÔLE D'ACIER GALVANISÉE PAR IMMERSION À CHAUD TERNAIRE TRAITÉE EN SURFACE L'UTILISANT, ET PROCÉDÉ DE FABRICATION ASSOCIÉ

(30) Priority: 05.12.2019 KR 20190160827
(43) Date of publication of application: 12.10.2022
(73) Proprietor: POSCO, Pohang-si, Gyeongsangbuk-do 37859 (KR)
(72) Inventor: CHO, Soo-Hyoun, Pohang-si, Gyeongsangbuk-do 37877 (KR); SON, Won-Ho, Pohang-si, Gyeongsangbuk-do 37877 (KR)
(74) Representative: Meissner Bolte Partnerschaft mbB
(86) International application number: PCT/KR2020/013942
(87) International publication number: WO 2021/112392

(56) References cited:
- EP-A2- 3 444 303
- JP-A- 2004 204 333
- KR-A- 20090 072 234
- KR-A- 20120 097 728
- KR-A- 20120 101 612
- KR-A- 20190 076 099

## Description

### [Technical Field]

The present disclosure relates to a surface treatment solution composition applied to a surface of a metal material and an application thereof, and more particularly, to a chromium-free surface treatment composition capable of improving a surface appearance of a steel sheet by providing corrosion resistance, blackening resistance, and a surface color to the steel sheet used for a building material and includes a ternary hot-dip galvannealed layer containing magnesium (Mg) and aluminum (Al), a ternary hot-dip galvannealed steel sheet surface-treated using the surface treatment composition, and a method for manufacturing the steel sheet.

### [Background Art]

In general, as a steel material having excellent corrosion resistance to red rust in comparison to a pure galvanized steel sheet, a steel sheet including a hot-dip galvannealed layer containing magnesium (Mg) and aluminum (Al) has an exposed surface containing mostly zinc (Zn) or a zinc alloy (Zn alloy), and in a case in which the steel sheet is exposed to a general living environment, or in particular, to a humid atmosphere, a white rust phenomenon occurs on the surface thereof. In addition, as magnesium and aluminum contained in the hot-dip galvannealed layer have higher oxygen affinity than zinc, a blackening phenomenon is likely to occur when the amount of oxygen combining with zinc is insufficient.

In the related art, as part of an anti-corrosive treatment, a metal surface was pre-treated with chromate in an amount of 5 to 100 mg/m² to form an organic coating film. However, due to heavy metals such as chromium (Cr) contained in the pre-treatment agent, additional pre-treatment facilities and processes were required, and safety of workers was problematic due to heavy metal wastewater. In addition, it was required for a solution containing hexavalent chromium generated from washing water and wastewater to be treated according to a specific treatment process, which caused an increase in manufacturing costss, and also in the case of the chromate-treated plated steel sheet, chromium ions were eluted when in use or discarded, causing a serious environmental pollution problem.

In order to solve such problems and to secure corrosion resistance, a surface treatment agent such as a corrosion resistant metal coating agent that does not contain chromium has been developed in the related art. As an example, Patent Documents 1 and 2 disclose techniques for forming a coating material by containing aluminum biphosphate or combining tannic acid with an aromatic carboxylic acid such as sodium acetate, sodium borate, or imidazole, and a surfactant, but these techniques have a problem with deterioration of corrosion resistance. Patent Document 3 discloses a surface treatment agent containing zirconium carbonate, vanadyl ions, a zirconium compound, and the like, and the surface treatment agent has excellent corrosion resistance, but has low blackening resistance.

Meanwhile, Patent Document 4 discloses a surface treatment agent containing titanium-based, zirconium-based, phosphoric acid-based, and molybdenum-based compounds, and the like, but the surface treatment agent cannot suppress a blackening phenomenon in a hot-dip galvannealed steel sheet in which magnesium, aluminum, and the like are used. Patent Document 5 discloses a surface treatment agent containing ammonium molybdate, a water-dispersible urethane resin, isopropylamine, zirconium ammonium carbonate, an epoxy-based silane coupling agent, and silica sol, but the surface treatment agent cannot provide sufficient corrosion resistance.

Meanwhile, in order for the steel sheet to be used as a steel material for a building material, surface characteristics need to be aesthetic, and it is required to provide a unique color so that the surface of the material is able to be distinguished from the existing hot-dip galvanized steel material and hot-dip galvannealed steel material when used by customers.

Patent document 6 relates to a color composite resin-coated steel sheet having a high-quality color texture, high formability, and high chemical resistance so as to be used for panels of image display electronics, and a method of manufacturing the steel sheet.

Patent document 7 relates to a chromium-free surface treatment solution composition applied to a surface of a metal material and a metal material surface-treated with the composition. More specifically, to a chromium-free surface treatment solution composition for improving the corrosion resistance, black degeneration, and alkali resistance of a ternary alloy hot-dip galvanized steel sheet.

Patent document 8 relates to the urethane resin composition which can be used for various uses including manufacture of a coating agent, an adhesive agent, and various molded objects.

### [Related Art Document]

### [Patent Document]

Japanese Patent Laid-Open Publication No. S53-28857
Japanese Patent Laid-Open Publication No. S51-71233
Japanese Patent Laid-Open Publication No. 2002-332574
Japanese Patent Laid-Open Publication No. H7-096699
Japanese Patent Laid-Open Publication No. 2005-146340
EP 3 444 303 A2
KR 2019 0076099 A
KR 2012 0101612 A

### [Disclosure]

### [Technical Problem]

The present disclosure has been devised in consideration of the circumstances as described above, and an object of the present disclosure is to provide a surface treatment composition for a hot-dip galvannealed steel sheet for a building material that may provide excellent corrosion resistance, blackening resistance, and unique surface color characteristics, a surface treatment method using the same, and a surface-treated hot-dip galvannealed steel sheet.

In addition, an object of the present disclosure is to provide a surface treatment composition that is harmless to the human body and does not cause a problem due to environmental pollution because it does not contain any heavy metal component such as chromium, which is an environmental pollutant.

### [Technical Solution]

The invention is set out in the appended set of claims.

### [Advantageous Effects]

As set forth above, according to an exemplary embodiment in the present disclosure, the ternary hot-dip galvannealed steel sheet treated with a surface treatment coating material may have excellent corrosion resistance, blackening resistance, and surface color, and may provide excellent effects on a treatment with chromium without problems such as an additional equipment installation, an increase in manufacturing costs, and environmental pollution.

### [Best Mode for Invention]

Hereinafter, preferred exemplary embodiments in the present disclosure will be described with reference to various exemplary embodiments.

The present disclosure relates to a surface treatment composition for a ternary hot-dip galvannealed steel sheet that provides excellent blackening resistance and alkali resistance, a ternary hot-dip galvannealed steel sheet surface-treated using the surface treatment composition, and a method for manufacturing the surface-treated ternary hot-dip galvannealed steel sheet.

According to an aspect of the present disclosure, a surface treatment composition contains, with respect to 100 wt% of a solids content of the composition: 70 to 90 wt% of a mixture of a high-molecular-weight polysilicon-modified polyurethane main resin and a low-molecular-weight polysilicon-modified polyurethane auxiliary resin; 5 to 25 wt% of a melamine-based curing agent; 0.5 to 10 wt% of an inorganic additive; 0.5 to 10 wt% of a hydrolyzable silane compound; 0.1 to 2 wt% of a coloring pigment; and a balance of a solvent.

The ternary hot-dip galvannealed steel sheet surface-treated with the surface treatment solution composition containing a water-soluble organic resin and an inorganic compound according to an exemplary embodiment in the present disclosure has excellent corrosion resistance, blackening resistance, and surface color. In addition, the water-soluble organic resin and the inorganic compound that are harmless to a human body are contained as main components without containing hexavalent chromium, which is a harmful environmental pollutant, such that the effect of preventing damage to the human body and environmental pollution may be obtained.

In the surface treatment composition according to the present disclosure, heterogeneous polysilicon-modified polyurethane resins are used. More specifically, the surface treatment composition contains a high-molecular-weight polysilicon-modified polyurethane main resin and a low-molecular-weight polysilicon-modified polyurethane auxiliary resin, and these resins are contained in an amount of 70 to 90 wt%. A mixing ratio of the main resin to the auxiliary resin is selected from a ratio of 1:9 to 9:1, and may be preferably 2:1 and more preferably 1:1, in terms of weight ratio. In the mixing ratio of the main resin to the auxiliary resin, a mixing amount of the main resin or the auxiliary resin is excessively large, one or more quality properties of corrosion resistance, water resistance, solvent resistance, processability, and adhesion may be deteriorated.

The high-molecular-weight polysilicon-modified polyurethane resin is a main resin of the surface treatment solution composition of the present disclosure, and is contained to provide excellent corrosion resistance, water resistance, and solvent resistance to the ternary hot-dip galvannealed steel sheet to be surface-treated. Meanwhile, the main resin is not particularly limited, and may be prepared by applying and synthesizing a silicone polymer and a polycarbonate polyol. When the resin is synthesized, it is preferable to apply a three-dimensional (trimer) isocyanate polymer to have self-crosslinking properties.

A weight average molecular weight (Mw) of the main resin is 100,000 to 200,000. When the weight average molecular weight is less than 100,000, it is difficult to secure sufficient corrosion resistance. On the other hand, when the weight average molecular weight exceeds 200,000, solution stability is deteriorated, and a hardness of the coating film is increased, which may cause deterioration of processability.

A glass transition temperature (Tg) of the main resin is preferably -20°C to -10°C. When the glass transition temperature is lower than -20°C, it is difficult to secure sufficient corrosion resistance. On the other hand, when the glass transition temperature exceeds -10°C, solution stability is deteriorated, and a hardness of the coating film is increased, which may cause deterioration of processability.

The low-molecular-weight polysilicon-modified polyurethane resin is an auxiliary resin of the surface treatment solution composition for a ternary hot-dip galvannealed steel sheet of the present disclosure, and is contained to provide soft properties to the ternary hot-dip galvannealed steel sheet to be surface-treated so as to improve processability and adhesion. In addition, the auxiliary resin is not particularly limited, and is synthesized by applying a silicone polymer and a polycarbonate polyol. It is preferable that the auxiliary resin has no self-crosslinking properties unlike the main resin.

A weight average molecular weight of the auxiliary resin is 30,000 to 70,000. When the weight average molecular weight is less than 30,000, it is difficult to secure sufficient corrosion resistance due to a reduction in density of the coating film. On the other hand, when the weight average molecular weight exceeds 70,000, processability and adhesion may be deteriorated due to an insufficient effect of providing soft properties to the coating film.

A glass transition temperature (Tg) of the auxiliary resin is preferably -30°C to -20°C. When the glass transition temperature is lower than -30°C, it is difficult to secure sufficient corrosion resistance due to a reduction in density of the coating film. On the other hand, when the glass transition temperature exceeds -20°, processability and adhesion may be deteriorated due to an insufficient effect of providing soft properties to the coating film.

The mixture of the main resin and the auxiliary resin is contained in an amount of 70 to 90 wt% with respect to 100 wt% of a solids content of the surface treatment composition. When the content of the main resin and the auxiliary resin is less than 70 wt%, it is difficult to secure sufficient corrosion resistance and alkali resistance, and when the content of the main resin and the auxiliary resin exceeds 90 wt%, a content of the curing agent and the inorganic compound in the surface treatment composition is relatively small, which may cause deterioration of corrosion resistance and solution stability.

The melamine-based curing agent is contained to form a dense crosslinking bond by reacting with the main resin and the auxiliary resin of the surface treatment solution composition for a ternary hot-dip galvannealed steel sheet so as to form a solid coating film. One feature of the melamine-based curing agent is to crosslink a skeletal polymer resin containing a carboxylic functional group by a combination of methoxymethyl, methylol, and imino functional groups. For example, the melamine-based curing agent may contain at least one selected from the group consisting of methoxymethylmelamine, butoxymethylmelamine, ethoxymethylmelamine, and a combination thereof.

It is necessary that the melamine-based curing agent is contained in an amount of 5 to 25 wt% with respect to 100 wt% of the solids content of the surface treatment composition. When the content of the melamine-based curing agent is less than 5 wt%, a sufficient crosslinking bond is not formed, and physical properties are thus not improved, and when the content of the melamine-based curing agent exceeds 25%, the solution stability is deteriorated due to excessive crosslinking bonds, and thus, solidification may occur over time.

The inorganic additive is contained to provide water resistance and blackening resistance to the ternary hot-dip galvannealed steel sheet to be surface-treated using the surface treatment solution composition for a ternary hot-dip galvannealed steel sheet. In addition, the inorganic additive may include one or more compounds selected from the group consisting of silica sol, alumina sol, titania sol, and zirconia sol.

It is necessary that a content of the inorganic additive is 0.5 to 10 wt% with respect to 100 wt% of the solids content of the surface treatment composition. When the content of the inorganic additive is less than 0.5 wt%, it is difficult to secure sufficient water resistance and blackening resistance, and when the content of the inorganic additive exceeds 10 wt%, the effect of improving blackening resistance may be insufficient, and corrosion resistance may be deteriorated.

The silane compound is contained to form a solid bond between the water-soluble organic resin and the inorganic additive of the surface treatment composition and to perform a coupling reaction by denaturing the water-soluble organic resin.

It is necessary that the silane compound is contained in an amount of 0.5 to 10 wt% with respect to 100 wt% of the solids content of the surface treatment composition. When the content of the silane compound is less than 0.5 wt%, it is difficult to secure corrosion resistance due to an insufficient content required for a coupling bond of the organic resin and the inorganic additive, and when the content of the silane compound exceeds 10 wt%, after reaction with the organic resin, an unreacted silane compound may be present, which may cause deterioration of corrosion resistance after processing.

The hydrolyzable silane compound may include one or more selected from the group consisting of vinylmethoxysilane, vinyltrimethoxysilane, vinylepoxysilane, vinyltriepoxysilane, methyltrimethoxysilane, tetraethyl orthosilicate, tetramethyl orthosilicate, 3-aminopropyltriepoxysilane, 3-glycidoxypropyltrimethoxysilane, 3-glycidoxypropyltriethoxysilane, 3-mercaptopropyltrimethoxysilane, N-(1,3-dimethylbutylidene)-3-(triepoxysilane)-1-propanamine, N,N-bis[3-(trimethoxysilyl)propyl]ethylenediamine, N-(β-aminoethyl)-γ-aminopropylmethyldimethoxysilane, N-(β-aminoethyl)-γ-aminopropyltrimethoxysilane, γ-glycidoxypropyltriethoxysilane, γ-mercaptopropyltriethoxysilane, and N-[2-(vinylbenzylamino)ethyl]-3-aminopropyltrimethoxysilane, and may be hydrolyzed by one or more solvents selected from the group consisting of formic acid, acetic acid, phosphoric acid, hydrochloric acid, and nitric acid.

The coloring pigment is contained in the surface treatment solution composition for a ternary hot-dip galvannealed steel sheet to provide a color of the ternary hot-dip galvannealed steel sheet to be surface-treated using the surface treatment solution composition so as to provide aesthetic surface characteristics.

The coloring pigment may include one or more selected from the group consisting of one or more inorganic pigments selected from the group consisting of titanium, lead, iron, copper, and chromium; and an azo-based organic pigment.

It is necessary that the coloring pigment is contained in an amount of 0.1 to 2 wt% with respect to 100 wt% of the solids content of the surface treatment composition. When the content of the coloring pigment is less than 0.1 wt%, a sufficient color is not expressed, and when the content of the coloring pigment exceeds 2 wt%, solution stability and corrosion resistance may be deteriorated.

The surface treatment composition of the present disclosure may contain water as a solvent for diluting the respective components, and the water may be deionized water or distilled water. The solution is contained as a balance in addition to the respective components of the present disclosure, and a content thereof is preferably 60 to 80 wt%. Furthermore, the surface treatment solution composition of the present disclosure may contain alcohol as an auxiliary solvent for securing solution stability, and the alcohol may be ethanol or isopropyl alcohol. It is preferable that the alcohol is contained in an amount of 3 to 10 wt% with respect to the entire solvent.

According to another aspect of the present disclosure, a ternary hot-dip galvannealed steel sheet surface-treated with the surface treatment solution composition is provided.

Specifically, the surface-treated ternary hot-dip galvannealed steel sheet includes: a steel sheet; a ternary hot-dip galvannealed layer formed on at least one surface of the steel sheet; and a surface treatment coating layer formed on the ternary hot-dip galvannealed layer and contains an organic resin and an inorganic compound.

It is preferable that the base steel sheet and the ternary hot-dip galvannealed layer include an Al-enriched layer formed at an interface, and are ternary hot-dip galvannealed steel materials having an occupied area ratio of the Al-enriched layer of 70% or more (including 100%). In addition, the ternary hot-dip galvannealed layer is preferably a ternary hot-dip galvannealed steel material containing 0.2 to 15 wt% of Al, 0.5 to 3.5 wt% of Mg, and a balance of Zn and inevitable impurities.

The ternary hot-dip galvannealed steel material of the present disclosure includes an Al-enriched layer formed at an interface between base iron and a Zn-Al-Mg-based alloy plating layer, and an occupied area ratio of the Al-enriched layer is 70% or more (including 100%) and more preferably 73% or more (including 100%). Here, the occupied area ratio refers to a ratio of an area of the Al-enriched layer to an area of the base iron on the assumption of a flat surface without considering three-dimensional curvature when perspectively viewed from the surface of the plated steel material in a thickness direction of the base iron. When the occupied area ratio of the Al-enriched layer is 70% or more, the Al-enriched layer has a form in which fine particles are continuously formed, such that plating properties and plating adhesion may be significantly improved.

In the ternary hot-dip galvannealed steel material of the present disclosure, Mg plays a significantly important role in improving corrosion resistance of the ternary hot-dip galvannealed steel material, and effectively prevents corrosion of the ternary hot-dip galvannealed steel material by forming a dense zinc hydroxide-based corrosion product on the surface of the plating layer under a corrosive environment. In order to secure the corrosion resistance effect desired in the present disclosure, Mg needs to be contained in an amount of 0.5 wt% or more and more preferably 0.9 wt% or more. However, when the content thereof is excessive, Mg oxide dross is rapidly increased on a surface of a plating bath, and an anti-oxidation effect by addition of trace elements is canceled. In terms of preventing this, Mg needs to be contained in an amount of 3.5 wt% or less and more preferably 3.2 wt% or less.

In the ternary hot-dip galvannealed steel material of the present disclosure, Al suppresses the formation of Mg oxide dross in the plating bath, and forms a Zn-Al-Mg-based intermetallic compound by reacting with Zn and Mg in the plating bath, such that corrosion resistance of the plated steel material is improved. In order to obtain such an effect in the present disclosure, Al needs to be contained in an amount of 0.2 wt% or more and more preferably 0.9 wt% or more. However, when the content thereof is excessive, weldability and phosphatability of the plated steel material may be deteriorated. In terms of preventing this, Al needs to be contained in an amount of 15 wt% or less and more preferably 12 wt% or less.

The surface treatment coating layer containing the organic resin and the inorganic compound is formed of a surface treatment composition containing, with respect to 100 wt% of a solids content of the composition: 70 to 90 wt% of a mixture of a high-molecular-weight polysilicon-modified polyurethane main resin and a low-molecular-weight polysilicon-modified polyurethane auxiliary resin; 5 to 25 wt% of a melamine-based curing agent; 0.5 to 10 wt% of an inorganic additive; 0.5 to 10 wt% of a hydrolyzable silane compound; and 0.1 to 2 wt% of a coloring pigment. The surface treatment composition is as described above.

More specifically, the coating layer on which the surface treatment composition is dried contains components remaining after all the volatile substances contained in the surface treatment coating layer containing the organic resin and the inorganic compound are volatilized. Therefore, in the surface treatment coating layer containing the organic resin and the inorganic compound, a solvent such as water or alcohol is not contained, and the solvent contained in the surface treatment component containing the organic resin and the inorganic compound is also not contained. Therefore, a content of the components contained in the surface treatment coating layer containing the organic resin and the inorganic compound is based on 100 wt% of the total solids content.

According to still another aspect of the present disclosure, a method for manufacturing a surface-treated ternary hot-dip galvannealed steel sheet includes: coating a surface treatment composition containing, with respect to 100 wt% of a solids content of the composition: 70 to 90 wt% of a mixture of a high-molecular-weight polysilicon-modified polyurethane main resin and a low-molecular-weight polysilicon-modified polyurethane auxiliary resin; 5 to 25 wt% of a melamine-based curing agent; 0.5 to 10 wt% of an inorganic additive; 0.5 to 10 wt% of a hydrolyzable silane compound; and 0.1 to 2 wt% of a coloring pigment, onto a ternary hot-dip galvannealed steel sheet in which a ternary hot-dip galvannealed layer is formed; and drying the coated surface treatment composition to form a surface treatment coating layer. The surface treatment composition is as described above.

According to an exemplary embodiment in the present disclosure, the surface treatment solution composition may be coated to a thickness of 2.5 to 50 µm, and a thickness of a dried coating layer formed by subjecting the surface treatment composition coated to the above thickness to a dry process may be 1 to 10 µm. When the coating thickness of the surface treatment composition is less than 2.5 µm, the surface treatment composition is applied too thinly on a peak portion of the roughness of the steel sheet, and thus, corrosion resistance may be deteriorated, and when the coating thickness of the surface treatment composition exceeds 50 µm, the coating layer is too thick, and thus, processability may be deteriorated and problems in cost-effectiveness due to an increase in cost of solution treatment may occur.

A method of coating the surface treatment solution composition is not particularly limited as long as it is a coating method commonly performed in the art. For example, it is preferable to perform any coating method selected from roll coating, spraying, immersion, spray squeezing, and immersion squeezing.

It is preferable that the drying of the surface treatment solution composition coated on the hot-dip galvannealed steel sheet is performed at a temperature of 70 to 250°C based on a peak metal temperature (PMT) of a material steel sheet. When the drying temperature is lower than 70°C based on the peak metal temperature (PMT) of the material steel sheet, a curing reaction of the organic resin is not completed performed, and thus, formation of a solid coating film structure may be insufficient, and corrosion resistance and alkali resistance may be deteriorated. When the drying temperature exceeds 250°C, work productivity may be deteriorated due to generation of water vapor and fumes during a water-cooling process, and surface quality of a product may be deteriorated due to a condensation phenomenon in which evaporated water vapor condenses on an upper portion of drying equipment.

Meanwhile, the drying is preferably performed in a hot-air drying furnace or an induction heating furnace. In a case in which the surface treatment coating composition is dried using the hot-air drying furnace, an internal temperature of the hot-air drying furnace is preferably 100 to 300°C. Meanwhile, in a case in which the surface treatment coating composition is dried using the induction heating furnace, a current applied to the induction heating furnace is preferably 1,000 to 5,000 A and more preferably 1,500 to 3,500 A. When the internal temperature of the hot-air drying furnace is lower than 100°C or the current applied to the induction heating furnace is lower than 1,000 A, a curing reaction of the surface treatment coating composition is completely performed, and thus, corrosion resistance and alkali resistance may be deteriorated. In addition, when the internal temperature of the hot-air drying furnace exceeds 300°C or the current applied to the induction heating furnace exceeds 5,000 A, work productivity may be deteriorated due to generation of water vapor and fume during the water-cooling process, and surface quality of a product may be deteriorated due to a condensation phenomenon in which evaporated water vapor condenses on an upper portion of drying equipment.

In addition, a ternary hot-dip galvannealed steel sheet may be provided, the steel sheet being finally surface-treated by drying the surface treatment solution composition to form a surface treatment coating layer and then water-cooling the surface treatment coating layer.

The method for manufacturing a ternary hot-dip galvannealed steel according to an exemplary embodiment in the present disclosure may be performed by a continuous process, and a speed of the continuous process is preferably 80 to 120 mpm. When the speed of the continuous process is lower than 80 mpm, productivity may be reduced, and when the speed of the continuous process exceeds 120 mpm, the solution may be scattered in the process of drying the surface treatment solution composition, which may cause defects on the surface.

### [Mode for Invention]

Hereinafter, the present disclosure will be described in more detail with reference to specific Examples.

### Examples

### Preparation of test specimen

A ternary hot-dip galvannealed steel sheet (coating weight on one surface: 0.5 to 2.0 g/m²) including a ternary hot-dip galvannealed layer containing, by wt%: 1.5% of Mg; 1.5% of Al; and a balance of Zn was cut into a size of 7 cm × 15 cm (width × length), oil was removed from the hot-dip galvannealed steel sheet, each of prepared compositions was applied to the hot-dip galvannealed steel sheet by a bar coater, and then, curing was performed under a condition of a peak metal temperature (PMT) of 180 ± 20°C, thereby preparing a test specimen.

### Test and evaluation method

The method and criteria for evaluating the physical properties of the surface-treated steel sheet in the present Example are as follows.

### <Flat sheet corrosion resistance>

The specimen was treated in accordance with the method specified in ASTM B117, and then, a rate of occurrence of white rust in the steel sheet over time was measured. In this case, the evaluation criteria are as follows.
⊚: The time taken for white rust to be generated was 144 hours or longer.
○: The time taken for white rust to be generated was 96 hours or longer and shorter than 144 hours.
△: The time taken for white rust to be generated was 55 hours or longer and shorter than 96 hours.
X: The time taken for white rust to be generated was shorter than 55 hours.

### <Processed part corrosion resistance>

The specimen was pushed up to a height of 6 mm using an Erichsen tester, and a degree of generation of white rust was measured when 48 hours have elapsed. In this case, the evaluation criteria are as follows.
⊚: Less than 5% of white rust generation area after 48 hours have elapsed
△: 5% or more and less than 7% of white rust generation area after 48 hours have elapsed
X: 7% or more of white rust generation area after 48 hours have elapsed

### <Blackening resistance>

The specimen was left in a thermo-hygrostat maintained at 50°C and a relative humidity of 95% for 120 hours, and a color change (color difference: ΔE) of the specimen before and after the test was observed. In this case, the evaluation criteria are as follows.
⊚ : $ΔE \leq 2$
○: $2 < ΔE \leq 3$
△: $3 < ΔE \leq 4$
X: $ΔE > 4$

### <Alkali resistance>

The specimen was immersed in an alkali degreasing solution at 60°C for 2 minutes, and then, a color difference (ΔE) before and after air blowing was measured. As the alkali degreasing solution, Finecleaner L 4460 A: 20 g/2.4 L + L 4460 B 12 g/2.4 L (pH = 12) manufactured by Parkerizing Co., Ltd. was used. In this case, the evaluation criteria are as follows.
⊚ : $ΔE \leq 2$
○: $2 < ΔE \leq 3$
△: $3 < ΔE \leq 4$
X: $ΔE > 4$

### <Solvent resistance>

The specimen was rubbed with a gauze soaked with an MEK solvent 10 times, and then, a color difference (ΔE) before and after rubbing was measured. In this case, the evaluation criteria are as follows.
⊚ : $ΔE \leq 2$
○: $2 < ΔE \leq 3$
△: $3 < ΔE \leq 4$
X: $ΔE > 4$

### <Solution stability>

The surface treatment composition placed in a container was put in a constant temperature oven at 50°C, and after storage of 7 days, occurrence of precipitates was visually observed, and a change in viscosity was measured. In this case, the evaluation criteria are as follows.
○: No generation of precipitates and change in viscosity of less than 1cP
△: No generation of precipitates and change in viscosity of 1 to 5 CP
X: Generation of precipitates or change in viscosity of more than 5 CP

### Example 1: Change in physical properties depending on content of polysilicon-modified polyurethane resin

A polysilicon-modified polyurethane resin having a weight average molecular weight of 150,000 was used as a high-molecular-weight polysilicon-modified polyurethane main resin, a polysilicon-modified polyurethane resin having a weight average molecular weight of 50,000 was used as a low-molecular-weight polysilicon-modified polyurethane auxiliary resin, and a melamine-based curing agent (CYMEL 303) as a curing agent, a titania sol compound as an inorganic additive, a hydrolyzable silane compound obtained by mixing vinyltriepoxysilane, methyltrimethoxysilane, and 3-glycidoxypropyltrimethoxysilane at a weight ratio of 1:1:1 as a hydrolyzable silane compound, and an azo-based organic coloring pigment as a coloring pigment were mixed with the contents shown in Table 1, thereby preparing a surface treatment solution composition. In the surface treatment composition, water and ethanol were used as a solvent.

The surface treatment composition was applied to the test specimen, and the flat sheet corrosion resistance, the processed part corrosion resistance, the blackening resistance, the alkali resistance, and the solution stability of the prepared specimen were evaluated. The evaluation results are shown in Table 1.

**[Table 1]**

| Classification | Composition (wt%) | | | | | Flat sheet corrosion resistance | Processed part corrosion resistance | Blackening resistance | Alkali resistance | Solution stability |
|---|---|---|---|---|---|---|---|---|---|---|
| | Polysilicon-modified polyurethane resin | Curing agent | Inorganic additive | Silane compound | Coloring pigment | | | | | |
| Comparative Example 1 | 65 | 25 | 5 | 4 | 1 | X | X | ○ | X | ○ |
| Inventive Example 1 | 70 | 20 | 5 | 4 | 1 | ○ | ⊚ | ○ | ○ | ○ |
| Inventive Example 2 | 80 | 15 | 2 | 2 | 1 | ⊚ | ⊚ | ⊚ | ⊚ | ○ |
| Inventive Example 3 | 90 | 7 | 1 | 1 | 1 | ⊚ | ⊚ | ⊚ | ⊚ | ○ |
| Comparative Example 2 | 95 | 3 | 1 | 0.5 | 0.5 | X | X | X | ○ | X |

| | | | | | | | | | | |
|---|---|---|---|---|---|---|---|---|---|---|
| * The content of the composition is based on 30 wt% of the solids content. | | | | | | | | | | |

Referring to Table 1, it could be confirmed that in Inventive Examples 1 to 3 in which the content of the polysilicon-modified polyurethane resin satisfied the content suggested by the present disclosure, all the physical properties exhibited good or higher results, but in Comparative Example 1 in which the amount of the polysilicon-modified polyurethane resin added was too small, the flat sheet corrosion resistance, the processed part corrosion resistance, and the alkali resistance exhibited defective results, and in Comparative Example 2 in which the amount of the polysilicon-modified polyurethane resin added was too large, the flat sheet corrosion resistance, the processed part corrosion resistance, the blackening resistance, and the solution stability exhibited defective results.

### Example 2: Change in physical properties depending on content ratio of main resin to auxiliary resin

A surface treatment composition was prepared by controlling the same composition components as in Example 1 to the contents as shown in Table 2 based on 100 parts by weight of the solids content. The surface treatment composition was applied to the test specimen, and the processed part corrosion resistance, the blackening resistance, and the alkali resistance according to a change in content ratio of the main resin to the auxiliary resin were evaluated. The evaluation results are shown in Table 2.

**[Table 2]**

| Classification | Weight ratio (A:B) | | Flat sheet corrosion resistance | Processed part corrosion resistance | Blackening resistance | Alkali resistance |
|---|---|---|---|---|---|---|
| | Main resin (A) | Auxiliary resin (B) | | | | |
| Comparative Example 3 | 5 | 95 | X | X | ○ | X |
| Inventive Example 4 | 10 | 90 | ○ | ⊚ | ○ | ○ |
| Inventive Example 5 | 67 | 23 | ⊚ | ⊚ | ⊚ | ⊚ |
| Inventive Example 6 | 50 | 50 | ⊚ | ⊚ | ⊚ | ⊚ |
| Inventive Example 7 | 90 | 10 | ⊚ | ⊚ | ⊚ | ⊚ |
| Comparative Example 4 | 95 | 5 | ○ | X | X | O |

| | | | | | | |
|---|---|---|---|---|---|---|
| * The content of the composition is based on 30 wt% of the solids content. | | | | | | |

Referring to Table 2, in Inventive Examples 4 to 7 in which the weight ratio of the main resin to the auxiliary resin satisfied the content ratio suggested by the present disclosure, all the physical properties exhibited good or higher results. On the other hand, it could be confirmed that in Comparative Example 3 in which the amount of the water-soluble main resin added was too small, the flat sheet corrosion resistance, the processed part corrosion resistance, and the alkali resistance exhibited defective results, and in Comparative Example 4 in which the amount of the auxiliary resin added was too small, the processed part corrosion resistance and the blackening resistance exhibited defective results.

### Example 3: Change in physical properties depending on content of curing agent

A surface treatment composition was prepared by controlling the same composition components as in Example 1 to the contents as shown in Table 3 based on 100 parts by weight of the solids content. The surface treatment composition was applied to the test specimen, and the flat sheet corrosion resistance, the processed part corrosion resistance, the blackening resistance, the alkali resistance, and the solution stability of the specimen were evaluated according to the change in content of the melamine curing agent. The evaluation results are shown in Table 3.

**[Table 3]**

| Classification | Composition (wt%) | | | | | Flat sheet corrosion resistance | Processed part corrosion resistance | Blackening resistance | Alkali resistance | Solution stability |
|---|---|---|---|---|---|---|---|---|---|---|
| | Curing agent | Polyurethane resin | Inorganic additive | Silane compound | Coloring pigment | | | | | |
| Comparative Example 5 | 4 | 85 | 5 | 5 | 1 | X | X | X | X | ○ |
| Inventive Example 8 | 5 | 85 | 5 | 4 | 1 | ○ | ○ | ○ | ○ | ○ |
| Inventive Example 9 | 15 | 75 | 5 | 4 | 1 | ⊚ | ⊚ | ⊚ | ⊚ | ○ |
| Inventive Example 10 | 25 | 70 | 2 | 2 | 1 | ⊚ | ⊚ | ○ | ⊚ | ○ |
| Comparative Example 6 | 26 | 70 | 2 | 1 | 1 | ○ | ○ | ○ | X | X |

| | | | | | | | | | | |
|---|---|---|---|---|---|---|---|---|---|---|
| * The content of the composition is based on 30% of the solids content. | | | | | | | | | | |

Referring to Table 3, in Inventive Examples 8 to 10 in which the content of the melamine curing agent satisfied the content suggested by the present disclosure, all the physical properties exhibited good or higher results. On the other hand, in Comparative Example 5 in which the amount of the melamine curing agent added was too small, all the physical properties excluding the solution stability exhibited defective results, but in Comparative Example 6 in which the amount of the melamine curing agent added was too large, the alkali resistance and the solution stability exhibited defective results.

### Example 4: Change in physical properties depending on content of organic additive

A surface treatment composition was prepared by controlling the same composition components as in Example 1 to the contents as shown in Table 4 based on 100 parts by weight of the solids content. The surface treatment composition was applied to the test specimen, and the flat sheet corrosion resistance, the processed part corrosion resistance, the blackening resistance, the alkali resistance, and the solution stability of the specimen were evaluated according to the change in content of the inorganic additive. The evaluation results are shown in Table 4.

**[Table 4]**

| Classificatio n | Composition (wt%) | | | | | Flat sheet corrosion resistance | Processed part corrosion resistance | Blackening resistance | Alkali resistance | Solution stability |
|---|---|---|---|---|---|---|---|---|---|---|
| | Inorganic additive | Polyurethane resin | Curing agent | Silane compound | Coloring pigment | | | | | |
| Comparative Example 7 | 0.4 | 85 | 10 | 4 | 0.6 | X | X | X | ○ | ○ |
| Inventive Example 11 | 0.5 | 85 | 10 | 4 | 0.5 | ○ | ○ | ○ | ○ | ○ |
| Inventive Example 12 | 5 | 75 | 15 | 4 | 1 | ⊚ | ⊚ | ⊚ | ⊚ | ○ |
| Inventive Example 13 | 10 | 70 | 15 | 2 | 1 | ⊚ | ⊚ | ○ | ⊚ | ○ |
| Comparative Example 8 | 11 | 70 | 15 | 3 | 1 | X | X | ○ | ○ | ○ |

| | | | | | | | | | | |
|---|---|---|---|---|---|---|---|---|---|---|
| * The content of the composition is based on 30% of the solids content. | | | | | | | | | | |

Referring to Table 4, in Inventive Examples 11 to 13 in which the content of the inorganic additive satisfied the content suggested by the present disclosure, all the physical properties exhibited good or higher results. On the other hand, it could be confirmed that in Comparative Example 7 in which the amount of the inorganic additive added was too small, the flat sheet corrosion resistance, the processed part corrosion resistance, and the blackening resistance exhibited defective results, and in Comparative Example 8 in which the amount of the inorganic additive added was too large, the flat sheet corrosion resistance and the processed part corrosion resistance exhibited defective results.

### 5. Change in physical properties depending on content and type of hydrolyzable silane compound

A surface treatment composition was prepared by controlling the same composition components as in Example 1 to the contents as shown in Table 5 based on 100 parts by weight of the solids content. The surface treatment composition was applied to the test specimen, and the flat sheet corrosion resistance, the processed part corrosion resistance, the blackening resistance, the alkali resistance, and the solution stability of the specimen were evaluated according to the change in content of the hydrolyzable silane compound. The evaluation results are shown in Table 5.

**[Table 5]**

| Classification | Composition (wt%) | | | | | Flat sheet corrosion resistance | Processed part corrosion resistance | Blackening resistance | Alkali resistance | Solution stability |
|---|---|---|---|---|---|---|---|---|---|---|
| | Silane compound | Polyurethane resin | Curing agent | Inorganic additive | Coloring pigment | | | | | |
| Comparative Example 9 | 0.4 | 85 | 10 | 4 | 0.6 | X | X | X | ○ | ○ |
| Inventive Example 14 | 0.5 | 85 | 10 | 4 | 0.5 | ○ | ⊚ | ○ | ○ | ○ |
| Inventive Example 15 | 5 | 75 | 15 | 4 | 1 | ⊚ | ⊚ | ⊚ | ⊚ | ○ |
| Inventive Example 16 | 10 | 70 | 15 | 2 | 1 | ⊚ | ⊚ | ⊚ | ⊚ | ○ |
| Comparative Example 10 | 11 | 70 | 15 | 3 | 1 | ○ | X | X | ○ | ○ |

| | | | | | | | | | | |
|---|---|---|---|---|---|---|---|---|---|---|
| * The content of the composition is based on 30% of the solids content. | | | | | | | | | | |

As shown in Table 5, in Inventive Examples 14 to 16 in which the content of the hydrolyzable silane compound satisfied the content suggested by the present disclosure, all the physical properties exhibited good or higher results. On the other hand, in Comparative Example 9 in which the amount of the hydrolyzable silane compound added was too small, the flat sheet corrosion resistance, the processed part corrosion resistance, and the blackening resistance exhibited defective results, and in Comparative Example 10 in which the amount of the hydrolyzable silane compound added was large, a hard coating film was formed due to an increased in dryness of the coating film, and thus, the processed part corrosion resistance was insufficient and the blackening resistance was defective.

Meanwhile, a surface treatment composition was prepared by changing the hydrolyzable silane compound to the hydrolyzable silane compound shown in Table 6 in the surface treatment composition having the composition according to Inventive Example 15, a specimen was prepared in the same manner as described above, and the flat sheet corrosion resistance was evaluated. The results thereof are shown in Table 6.

**[Table 6]**

| Classification | A | B | C | D | E | F | G | H | I | J | K | Flat sheet corrosion resistance |
|---|---|---|---|---|---|---|---|---|---|---|---|---|
| | content | content | content | content | content | content | content | content | content | content | content | |
| Inventive Example 17 | 5 | 0 | 0 | 0 | 0 | 0 | 0 | 0 | 0 | 0 | 0 | ○ |
| Inventive Example 18 | 0 | 5 | 0 | 0 | 0 | 0 | 0 | 0 | 0 | 0 | 0 | ⊚ |
| Inventive Example 19 | 0 | 0 | 5 | 0 | 0 | 0 | 0 | 0 | 0 | 0 | 0 | ○ |
| Inventive Example 20 | 0 | 0 | 0 | 5 | 0 | 0 | 0 | 0 | 0 | 0 | 0 | ⊚ |
| Inventive Example 21 | 0 | 0 | 0 | 0 | 5 | 0 | 0 | 0 | 0 | 0 | 0 | ○ |
| Inventive Example 22 | 0 | 0 | 0 | 0 | 0 | 5 | 0 | 0 | 0 | 0 | 0 | ⊚ |
| Inventive Example 23 | 0 | 0 | 0 | 0 | 0 | 0 | 5 | 0 | 0 | 0 | 0 | ○ |
| Inventive Example 24 | 0 | 0 | 0 | 0 | 0 | 0 | 0 | 5 | 0 | 0 | 0 | ○ |
| Inventive Example 25 | 0 | 0 | 0 | 0 | 0 | 0 | 0 | 0 | 5 | 0 | 0 | ○ |
| Inventive Example 26 | 0 | 0 | 0 | 0 | 0 | 0 | 0 | 0 | 0 | 5 | 0 | ⊚ |
| Inventive Example 27 | 0 | 0 | 0 | 0 | 0 | 0 | 0 | 0 | 0 | 0 | 5 | ○ |
| Inventive Example 28 | 2.5 | 2.5 | 0 | 0 | 0 | 0 | 0 | 0 | 0 | 0 | 0 | ○ |
| Inventive Example 29 | 2.5 | 0 | 0 | 2.5 | 0 | 0 | 0 | 0 | 0 | 0 | 0 | ○ |
| Inventive Example 30 | 0 | 2.5 | 0 | 0 | 0 | 2.5 | 0 | 0 | 0 | 0 | 0 | ⊚ |
| Inventive Example 31 | 0 | 0 | 0 | 2.5 | 0 | 2.5 | 0 | 0 | 0 | 0 | 0 | ○ |
| Inventive Example 32 | 0 | 0 | 0 | 0 | 2.5 | 0 | 2.5 | 0 | 0 | 0 | 0 | ○ |
| Inventive Example 33 | 0 | 0 | 0 | 0 | 0 | 2.5 | 0 | 0 | 0 | 2.5 | 0 | ⊚ |
| Inventive Example 34 | 0 | 0 | 2.5 | 0 | 0 | 2.5 | 0 | 0 | 0 | 0 | 0 | ○ |
| Inventive Example 35 | 0 | 0 | 0 | 0 | 0 | 0 | 2.5 | 0 | 0 | 2.5 | 0 | ○ |
| Inventive Example 36 | 2.5 | 0 | 0 | 0 | 0 | 0 | 0 | 0 | 0 | 2.5 | 0 | ○ |
| Inventive Example 37 | 0 | 0 | 0 | 0 | 0 | 0 | 0 | 0 | 0 | 2.5 | 2.5 | O |
| Inventive Example 38 | 0 | 0 | 0 | 2.5 | 0 | 0 | 0 | 0 | 2.5 | 0 | 0 | ○ |
| Inventive Example 39 | 0 | 0 | 0 | 0 | 2.5 | 0 | 0 | 2.5 | 0 | 0 | 0 | ○ |
| Inventive Example 40 | 0 | 0 | 0 | 0 | 0 | 0 | 0 | 2.5 | 0 | 0 | 2.5 | ○ |
| Inventive Example 41 | 0 | 2.5 | 2.5 | 0 | 0 | 0 | 0 | 0 | 0 | 0 | 0 | ⊚ |
| Inventive Example 42 | 0 | 2 | 2 | 0 | 0 | 0 | 0 | 0 | 0 | 0 | 1 | O |
| Inventive Example 43 | 0 | 0 | 0 | 1 | 0 | 0 | 2 | 0 | 2 | 0 | 0 | ○ |
| Inventive Example 44 | 0 | 0 | 0 | 0 | 2 | 1 | 0 | 0 | 2 | 0 | 0 | ○ |
| Inventive Example 45 | 0 | 2 | 0 | 3.5 | 0 | 0 | 1 | 0 | 0 | 0 | 2 | ○ |
| Inventive Example 46 | 0 | 2 | 0 | 0 | 0 | 0 | 0 | 0 | 0 | 1 | 2 | ⊚ |
| Inventive Example 47 | 2 | 0 | 2 | 0 | 0 | 0 | 0 | 0 | 0 | 0 | 1 | ○ |
| Inventive Example 48 | 0 | 1 | 0 | 0 | 0 | 0 | 0 | 0 | 2 | 2 | 0 | ○ |
| Inventive Example 49 | 0 | 2 | 0 | 0 | 1 | 0 | 0 | 0 | 0 | 2 | 0 | ○ |
| Inventive Example 50 | 0 | 0 | 0 | 0 | 0 | 0 | 2 | 2 | 0 | 0 | 1 | ○ |
| A: 2-(3,4-Epoxycyclohexyl)-ethyltrimethoxysilane | | | | | | G: N-2-(Aminoethyl)-3-aminopropyltriethoxysilane | | | | | | |
| B: 3-Glycidoxypropyltrimethoxysilane | | | | | | H: 3-Pminopropyltrimethoxysilane | | | | | | |
| C: 3-Glycidoxypropylmethyldiethoxysilane | | | | | | I: 3-Pminopropyltriethoxysilane | | | | | | |
| D: 3-Glycidoxypropyltriethoxysilane | | | | | | J: Vinyltriepoxysilane | | | | | | |
| E: N-2- (Aminoethyl)-3-aminopropylmethyldimethoxysilane | | | | | | K: Methyltrimethoxysilane | | | | | | |
| F: N-2-(Aminoethyl)-3-aminopropyltrimethoxysilane | | | | | | | | | | | | |

| | | | | | | | | | | | | |
|---|---|---|---|---|---|---|---|---|---|---|---|---|
| * The content of the composition is based on 30% of the solids content. | | | | | | | | | | | | |

As shown in Table 6, in Inventive Examples 17 to 50, the flat sheet corrosion resistance exhibited good or excellent results. In particular, in Inventive Example 46 in which 3-glycidoxypropyltrimethoxysilane, vinyltriepoxysilane, and methyltrimethoxysilane were used at a weight ratio of 2:1:2, the area of white rust generated after 144 hours or longer was 0%, which exhibited the best results.

### Example 6: Change in physical properties depending on content of coloring pigment

A surface treatment composition was prepared by controlling the same composition components as in Example 1 to the contents as shown in Table 7 based on 100 parts by weight of the solids content. The surface treatment composition was applied to the test specimen, and the flat sheet corrosion resistance, the processed part corrosion resistance, the blackening resistance, the alkali resistance, and the solution stability of the specimen were evaluated according to the change in content of the coloring pigment. The evaluation results are shown in Table 7.

The solution stability evaluation method was the same as the method described above, the degree of surface color expression was determined by visually observing the test specimen treated with the surface treatment composition, and the degree of color expression was classified into good (O) and defective (X).

**[Table 7]**

| Classification | Composition (wt%) | | | | | Flat sheet corrosion resistance | Processed part corrosion resistance | Blackening resistance | Alkali resistance | Surface color exhibition | Solution stability |
|---|---|---|---|---|---|---|---|---|---|---|---|
| | Coloring pigment | Polyurethane resin | Curing agent | Inorganic additive | Silane compound | | | | | | |
| Comparative Example 11 | 0.05 | 85 | 10 | 4 | 0.4 | ○ | ⊚ | ○ | ○ | X | ○ |
| Inventive Example 51 | 0.1 | 85 | 10 | 4 | 0.5 | ○ | ⊚ | ○ | ○ | ○ | ○ |
| Inventive Example 52 | 1 | 75 | 15 | 4 | 5 | ⊚ | ⊚ | ⊚ | ⊚ | ⊚ | ○ |
| Inventive Example 53 | 2 | 70 | 15 | 2 | 10 | ⊚ | ⊚ | ⊚ | ⊚ | ⊚ | ○ |
| Comparative Example 12 | 2.5 | 70 | 15 | 3 | 11 | X | X | ⊚ | ○ | ⊚ | X |

| | | | | | | | | | | | |
|---|---|---|---|---|---|---|---|---|---|---|---|
| * The content of the composition is based on 30% of the solids content. | | | | | | | | | | | |

As shown in Table 7, in Inventive Examples 51 to 53 in which the content of the coloring pigment satisfied the content suggested by the present disclosure, all the physical properties exhibited good or higher results. On the other hand, in Comparative Example 11 in which the amount of the coloring pigment added was too small, the surface color expression exhibited a defective result, and in Comparative Example 12 in which the amount of the coloring pigment added was too large, the corrosion resistance and the solution stability exhibited defective results.

### 7. Change in physical properties depending on thickness and drying temperature of coating layer

A surface treatment composition was prepared in the same manner as that of Example 1, except that the composition of Inventive Example 2 was used, the surface treatment composition was coated to a specimen, and a thickness and a PMT temperature of the coated coating layer were controlled to the thickness shown in Table 8. The flat sheet corrosion resistance, the processed part corrosion resistance, the blackening resistance, and the alkali resistance of the prepared specimen were evaluated. The evaluation results are shown in Table 8.

**[Table 8]**

| Classification | Coating layer thickness (µm) | Drying temperature (°C) | Flat sheet corrosion resistance | Processed part corrosion resistance | Blackening resistance | Alkali resistance |
|---|---|---|---|---|---|---|
| Comparative Example 13 | 0.5 | 180 | Δ | X | Δ | Δ |
| Inventive Example 54 | 1 | 180 | ⊚ | ⊚ | ⊚ | ⊚ |
| Inventive Example 55 | 4 | 180 | ⊚ | ⊚ | ⊚ | ⊚ |
| Inventive Example 56 | 7 | 180 | ⊚ | ⊚ | ○ | ⊚ |
| Inventive Example 57 | 10 | 180 | ⊚ | ⊚ | ○ | ⊚ |
| Comparative Example 14 | 11 | 180 | ⊚ | X | ○ | ⊚ |
| Comparative | 5 | 50 | X | X | X | X |
| Example 15 | | | | | | |
| Inventive Example 58 | 5 | 70 | ○ | ○ | ○ | Δ |
| Inventive Example 59 | 5 | 100 | ⊚ | ⊚ | ⊚ | ⊚ |
| Inventive Example 60 | 5 | 250 | ⊚ | ⊚ | ○ | ⊚ |
| Comparative Example 16 | 5 | 270 | ⊚ | ⊚ | X | ⊚ |

As shown in Table 8, in Inventive Examples 54 to 57 in which the coating layer having a thickness of 1 to 10 µm was formed, all the physical properties exhibited good or higher results. On the other hand, in Comparative Example 13 in which the formed coating film was too thin, the flat sheet corrosion resistance, the blackening resistance, and the alkali resistance exhibited moderate (△) results, and the processed part corrosion resistance exhibited a defective result. Meanwhile, it could be confirmed that in Comparative Example 14 in which the formed coating film was too thick, the processed part corrosion resistance exhibited a defective result, and there were no improved physical properties in comparison to Inventive Example 57, a thickness of the coating film larger than that in Inventive Example 57 was not required in terms of cost-effectiveness. Meanwhile, as shown in Table 8, in Inventive Examples 58 to 60 in which the coating layer was formed at a drying temperature of the coating film of 70 to 250°C, all the physical properties exhibited good or higher results. On the other hand, it could be confirmed that in Comparative Example 15 in which the drying temperature was too low, the drying was not sufficiently performed, all the physical properties exhibited defective results, and in Comparative Example 16 in which the drying temperature was too high, the blackening resistance exhibited a defective result due to fume drop on the steel sheet caused by a condensation phenomenon of water vapor generated in the steel sheet during the cooling process (water-cooling).

## Claims

1. A surface treatment composition comprising, with respect to 100 wt% of a solids content of the composition:
70 to 90 wt% of a mixture of a high-molecular-weight polysilicon-modified polyurethane main resin with a weight average molecular weight (Mw) of 100,000 to 200,000 and a low-molecular-weight polysilicon-modified polyurethane auxiliary resin with a weight average molecular weight (Mw) of 30,000 to 70,000;
5 to 25 wt% of a melamine-based curing agent;
0.5 to 10 wt% of an inorganic additive;
0.5 to 10 wt% of a hydrolyzable silane compound; and
0.1 to 2 wt% of a coloring pigment,
wherein a weight ratio of the main resin to the auxiliary resin is 1:9 to 9:1.

2. The surface treatment composition of claim 1, wherein a glass transition temperature (Tg) of the main resin is -20°C to -10°C.

3. The surface treatment composition of claim 1, wherein a glass transition temperature (Tg) of the auxiliary resin is -30°C to -20°C.

4. The surface treatment composition of claim 1, wherein the inorganic additive includes one or more selected from the group consisting of silica sol, alumina sol, titania sol, and zirconia sol.

5. The surface treatment composition of claim 1, wherein the hydrolyzable silane compound includes one or more selected from the group consisting of vinylmethoxysilane, vinyltrimethoxysilane, vinylepoxysilane, vinyltriepoxysilane, methyltrimethoxysilane, tetraethyl orthosilicate, tetramethyl orthosilicate, 3-aminopropyltriepoxysilane, 3-glycidoxypropyltrimethoxysilane, 3-glycidoxypropyltriethoxysilane, 3-mercaptopropyltrimethoxysilane, N-(1,3-dimethylbutylidene)-3-(triepoxysilane)-1-propanamine, N,N-bis[3-(trimethoxysilyl)propyl]ethylenediamine, N-(β-aminoethyl)-γ-aminopropylmethyldimethoxysilane, N-(β-aminoethyl)-γ-aminopropyltrimethoxysilane, γ-glycidoxypropyltriethoxysilane, γ-mercaptopropyltriethoxysilane, and N-[2-(vinylbenzylamino)ethyl]-3-aminopropyltrimethoxysilane.

6. The surface treatment composition of claim 5, wherein the hydrolyzable silane compound is hydrolyzable by one or more solvents selected from the group consisting of formic acid, acetic acid, phosphoric acid, hydrochloric acid, and nitric acid.

7. The surface treatment composition of claim 1, wherein the coloring pigment includes one or more selected from the group consisting of one or more inorganic pigments selected from the group consisting of titanium, lead, iron, copper, and chromium; and an azo-based organic pigment.

8. A surface-treated ternary hot-dip galvannealed steel sheet comprising:
a steel sheet;
a ternary hot-dip galvannealed layer formed on at least one surface of the steel sheet; and
a surface treatment coating layer formed on the ternary hot-dip galvannealed layer,
wherein the surface treatment coating layer is formed of the surface treatment composition of any one of claims 1 to 7,
wherein a thickness of the surface treatment coating layer is 1 to 10 µm.

9. The surface-treated ternary hot-dip galvannealed steel sheet of claim 8, wherein the ternary hot-dip galvannealed layer includes an Al-enriched layer formed at an interface, and an occupied area ratio of the Al-enriched layer is 70% or more.

10. The surface-treated ternary hot-dip galvannealed steel sheet of claim 8, wherein the ternary hot-dip galvannealed layer contains 0.2 to 15 wt% of Al, 0.5 to 3.5 wt% of Mg, and a balance of Zn and inevitable impurities.

11. A method for manufacturing a surface-treated ternary hot-dip galvannealed steel sheet, the method comprising:
coating the surface treatment composition of any one of claims 1 to 7 onto a ternary hot-dip galvannealed steel sheet in which a ternary hot-dip galvannealed layer is formed; and
drying the coated surface treatment composition at a temperature of 70 to 250°C based on a peak metal temperature (PMT) of a material steel sheet to form a surface treatment coating layer.

## Patentansprüche

1. Oberflächenbehandlungszusammensetzung, umfassend Folgendes, bezogen auf 100 Gew.-% eines Feststoffgehalts der Zusammensetzung:
70 bis 90 Gew.-% einer Mischung aus einem hochmolekularen, mit Polysilizium modifizierten Polyurethan-Hauptharz mit einem Gewichtsmittel des Molekulargewichts (Mw) von 100.000 bis 200.000 und einem niedermolekularen, mit Polysilizium modifizierten Polyurethan-Hilfsharz mit einem Gewichtsmittel des Molekulargewichts (Mw) von 30.000 bis 70.000;
5 bis 25 Gew.-% eines Härtungsmittels auf Melaminbasis;
0,5 bis 10 Gew.-% eines anorganischen Additivs;
0,5 bis 10 Gew.-% einer hydrolysierbaren Silanverbindung; und
0,1 bis 2 Gew.-% eines Farbpigments,
wobei ein Gewichtsverhältnis des Hauptharzes zu dem Hilfsharz 1:9 bis 9:1 beträgt.

2. Oberflächenbehandlungszusammensetzung nach Anspruch 1, wobei eine Glasübergangstemperatur (Tg) des Hauptharzes -20 °C bis -10 °C beträgt.

3. Oberflächenbehandlungszusammensetzung nach Anspruch 1, wobei eine Glasübergangstemperatur (Tg) des Hilfsharzes -30 °C bis -20 °C beträgt.

4. Oberflächenbehandlungszusammensetzung nach Anspruch 1, wobei das anorganische Additiv eines oder mehrere aus der Gruppe bestehend aus Kieselsol, Aluminiumoxid-Sol, Titandioxid-Sol und Zirkonoxid-Sol beinhaltet.

5. Oberflächenbehandlungszusammensetzung nach Anspruch 1, wobei die hydrolysierbare Silanverbindung eine oder mehrere Ausgewählte aus der Gruppe bestehend aus Vinylmethoxysilan, Vinyltrimethoxysilan, Vinylepoxysilan, Vinyltriepoxysilan, Methyltrimethoxysilan, Tetraethylorthosilikat, Tetramethylorthosilikat, 3-Aminopropyltriepoxysilan, 3-Glycidoxypropyltrimethoxysilan, 3-Glycidoxypropyltriethoxysilan, 3-Mercaptopropyltrimethoxysilan, N-(1,3-Dimethylbutyliden)-3-(triepoxysilan)-1-propanamin, N,N-Bis[3-(trimethoxysilyl)propyl]ethylendiamin, N-(β-Aminoethyl)-γ-aminopropylmethyldimethoxysilan, N-(β-Aminoethyl)-γ-aminopropyltrimethoxysilan, γ-Glycidoxypropyltriethoxysilan, γ-Mercaptopropyltriethoxysilan und N-[2-(Vinylbenzylamino)ethyl]-3-aminopropyltrimethoxysilan beinhaltet.

6. Oberflächenbehandlungszusammensetzung nach Anspruch 5, wobei die hydrolysierbare Silanverbindung durch ein oder mehrere Lösungsmittel hydrolysierbar ist, die aus der Gruppe bestehend aus Ameisensäure, Essigsäure, Phosphorsäure, Salzsäure und Salpetersäure ausgewählt sind.

7. Oberflächenbehandlungszusammensetzung nach Anspruch 1, wobei das Farbpigment eine oder mehrere Ausgewählte aus der Gruppe bestehend aus einem oder mehreren anorganischen Pigmenten, die aus der Gruppe bestehend aus Titan, Blei, Eisen, Kupfer und Chrom ausgewählt sind, sowie ein organisches Pigment auf Azo-Basis beinhaltet.

8. Oberflächenbehandeltes ternäres feuerverzinktes und geglühtes Stahlblech, umfassend:
ein Stahlblech;
eine ternäre feuerverzinkte und geglühte Schicht, die auf mindestens einer Oberfläche des Stahlblechs ausgebildet ist; und
eine Oberflächenbehandlungsbeschichtungsschicht, die auf der ternären feuerverzinkten und geglühten Schicht ausgebildet ist,
wobei die Oberflächenbehandlungsbeschichtungsschicht aus der Oberflächenbehandlungszusammensetzung nach einem der Ansprüche 1 bis 7 ausgebildet ist,
wobei eine Dicke der Oberflächenbehandlungsbeschichtungsschicht 1 bis 10 µm beträgt.

9. Oberflächenbehandeltes ternäres feuerverzinktes und geglühtes Stahlblech nach Anspruch 8, wobei die ternäre feuerverzinkte und geglühte Schicht eine Al-angereicherte Schicht beinhaltet, die an einer Grenzfläche ausgebildet ist, und ein beanspruchter Flächenanteil der Al-angereicherten Schicht 70 % oder mehr beträgt.

10. Oberflächenbehandeltes ternäres feuerverzinktes und geglühtes Stahlblech nach Anspruch 8, wobei die ternäre feuerverzinkte und geglühte Schicht 0,2 bis 15 Gew.-% Al, 0,5 bis 3,5 Gew.-% Mg und einen Rest an Zn und unvermeidbaren Verunreinigungen enthält.

11. Verfahren zum Herstellen eines oberflächenbehandelten ternären feuerverzinkten und geglühten Stahlblechs, wobei das Verfahren Folgendes umfasst:
Beschichten, mit der Oberflächenbehandlungszusammensetzung nach einem der Ansprüche 1 bis 7, eines ternären feuerverzinkten und geglühten Stahlblechs, in dem eine ternäre feuerverzinkte und geglühte Schicht ausgebildet ist; und
Trocknen der als Beschichtung aufgebrachten Oberflächenbehandlungszusammensetzung bei einer Temperatur von 70 bis 250 °C, basierend auf einer Spitzenmetalltemperatur (PMT) eines Materialstahlblechs, um eine Oberflächenbehandlungsbeschichtungsschicht auszubilden.

## Revendications

1. Composition de traitement de surface comprenant, par rapport à 100 % en poids d'une teneur en solides de la composition :
70 à 90 % en poids d'un mélange d'une résine principale de polyuréthane modifiée par polysilicium de haut poids moléculaire, présentant un poids moléculaire moyen en poids (Mw) de 100 000 à 200 000 et d'une résine auxiliaire de polyuréthane modifiée par polysilicium de faible poids moléculaire, présentant un poids moléculaire moyen en poids (Mw) de 30 000 à 70 000 ;
5 à 25 % en poids d'un agent de durcissement à base de mélamine ;
0,5 à 10 % en poids d'un additif inorganique ;
0,5 à 10 % en poids d'un composé silane hydrolysable ; et
0,1 à 2 % en poids d'un pigment colorant,
dans laquelle un rapport pondéral entre la résine principale et la résine auxiliaire est de 1:9 à 9:1.

2. Composition de traitement de surface selon la revendication 1, dans laquelle une température de transition vitreuse (Tg) de la résine principale est de -20 °C à -10 °C.

3. Composition de traitement de surface selon la revendication 1, dans laquelle une température de transition vitreuse (Tg) de la résine auxiliaire est de -30 °C à -20 °C.

4. Composition de traitement de surface selon la revendication 1, dans laquelle l'additif inorganique inclut un ou plusieurs éléments choisis dans le groupe consistant en du sol de silice, du sol d'alumine, du sol de dioxyde de titane et du sol de dioxyde de zirconium.

5. Composition de traitement de surface selon la revendication 1, dans laquelle le composé silane hydrolysable inclut un ou plusieurs éléments choisis dans le groupe consistant en vinylméthoxysilane, vinyltriméthoxysilane, vinylépoxysilane, vinyltriépoxysilane, méthyltriméthoxysilane, orthosilicate de tétraéthyle, orthosilicate de tétraméthyle, 3-aminopropyltriépoxysilane, 3-glycidoxypropyltriméthoxysilane, 3-glycidoxypropyltriethoxysilane, 3-mercaptopropyltriméthoxysilane, N-(1,3-diméthylbutylidène)-3-(triépoxysilane)-1-propanamine, N,N-bis[3-(triméthoxysilyl)propyl]éthylènediamine, N-(β-aminoéthyl)-γ-aminopropylméthyldiméthoxysilane, N-(β-aminoéthyl)-γ-aminopropyltriméthoxysilane, γ-glycidoxypropyltriéthoxysilane, γ-mercaptopropyltriéthoxysilane et N-[2-(vinylbenzylamino)éthyl]-3-aminopropyltriméthoxysilane.

6. Composition de traitement de surface selon la revendication 5, dans laquelle le composé silane hydrolysable est hydrolysable par un ou plusieurs solvants choisis dans le groupe consistant en acide formique, acide acétique, acide phosphorique, acide chlorhydrique et acide nitrique.

7. Composition de traitement de surface selon la revendication 1, dans laquelle le pigment colorant comprend un ou plusieurs éléments choisis parmi le groupe consistant en un ou plusieurs pigments inorganiques choisis dans le groupe consistant en titane, plomb, fer, cuivre et chrome ; et un pigment organique à base d'azo.

8. Tôle d'acier galvanisée à chaud puis recuite ternaire traitée en surface, comprenant :
une tôle d'acier ;
une couche galvanisée à chaud puis recuite ternaire formée sur au moins une surface de la tôle d'acier ; et
une couche de revêtement de traitement de surface formée sur la couche galvanisée à chaud puis recuite ternaire,
dans laquelle la couche de revêtement de traitement de surface est formée à partir de la composition de traitement de surface de l'une quelconque des revendications 1 à 7,
dans laquelle une épaisseur de la couche de revêtement de traitement de surface est de 1 à 10 µm.

9. Tôle d'acier galvanisée à chaud puis recuite ternaire traitée en surface selon la revendication 8, dans laquelle la couche galvanisée à chaud puis recuite ternaire inclut une couche enrichie en Al formée au niveau d'une interface, et un rapport d'aire occupée de la couche enrichie en Al est de 70 % ou plus.

10. Tôle d'acier galvanisée à chaud puis recuite ternaire traitée en surface selon la revendication 8, dans laquelle la couche galvanisée à chaud recuite ternaire contient 0,2 à 15 % en poids d'Al, 0,5 à 3,5 % en poids de Mg, et un reste de Zn et d'impuretés inévitables.

11. Procédé de fabrication d'une tôle d'acier galvanisée à chaud puis recuite ternaire traitée en surface, le procédé comprenant :
le revêtement de la composition de traitement de surface de l'une quelconque des revendications 1 à 7 sur une tôle d'acier galvanisée à chaud puis recuite ternaire, sur laquelle est formée une couche galvanisée à chaud puis recuite ternaire ; et
le séchage de la composition de traitement de surface revêtue à une température de 70 à 250 °C, sur la base d'une température maximale du métal (PMT) d'une tôle d'acier constituant le matériau de base, afin de former une couche de revêtement de traitement de surface.
